# FASCICULE DE BREVET EUROPEEN

(11) **EP 3 266 713 B1**
(45) Date de publication et mention de la délivrance du brevet: **04.03.2020**
(21) Numéro de dépôt: 17177292.4
(22) Date de dépôt: 22.06.2017
(51) Int. Cl.: B64D 27/26, F16B 37/04

(54) **ATTACHE MOTEUR D'AERONEF COMPRENANT AU MOINS UN ECROU TRANSVERSAL ET AERONEF COMPRENANT LADITE ATTACHE MOTEUR**
MOTORBEFESTIGUNG FÜR LUFTFAHRZEUG, DIE MINDESTENS EINE QUER VERLAUFENDE MUTTER UMFASST, UND LUFTFAHRZEUG, DAS DIESE MOTORBEFESTIGUNG UMFASST
AIRCRAFT ENGINE MOUNT COMPRISING AT LEAST ONE TRANSVERSE NUT AND AIRCRAFT COMPRISING SAID ENGINE MOUNT

(30) Priorité: 08.07.2016 FR 1656590
(43) Date de publication de la demande: 10.01.2018
(73) Titulaire: AIRBUS OPERATIONS (S.A.S.), 31060 Toulouse (FR)
(72) Inventeur: BOUCHET, Eric, 31840 AUSSONNE (FR); JOURNADE, Frédéric, 31100 TOULOUSE (FR); MUTIN, Antoine, 31840 AUSSONNE (FR); GROSSEAU, Nicolas, 31270 FROUZINS (FR)
(74) Mandataire: Gicquel, Olivier Yves Gérard

(56) Documents cités:
- EP-A1- 0 527 672
- EP-A1- 0 934 877
- EP-A1- 2 952 753
- FR-A1- 2 915 176
- US-A- 2 903 035
- US-A1- 2009 285 652

## Description

La présente invention se rapporte à une attache moteur d'aéronef comprenant au moins un écrou transversal ainsi qu'à un aéronef comprenant ladite attache moteur. L'état de l'art concerné est illustré par le document EP-A1-0 934 877.

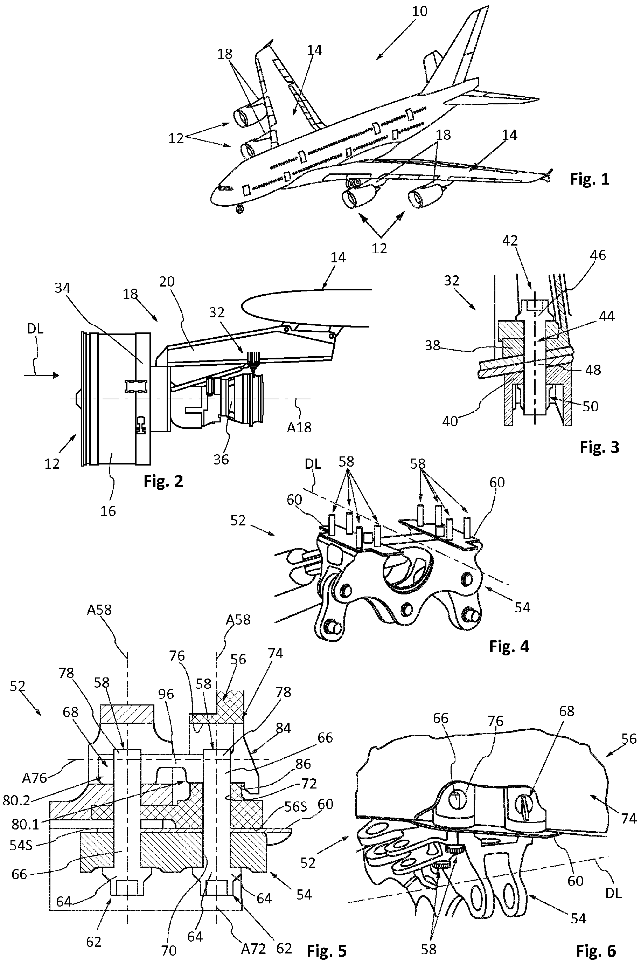

Selon une configuration visible sur les figures 1 et 2, un aéronef 10 comprend plusieurs ensembles moteurs 12 qui sont positionnés sous la voilure 14 de l'aéronef 10 et qui comportent chacun un moteur 16 relié à la voilure 14 par un mât 18.

Le mât 18 comprend une structure primaire 20 rigide qui assure entre autre la transmission des efforts entre le moteur 16 et le reste de l'aéronef 10 et une structure secondaire qui enveloppe la structure primaire 20 et qui limite la traînée du mât.

Dans l'ensemble de la description, une direction longitudinale DL est une direction sensiblement parallèle à l'axe moteur A18. Une direction transversale est une direction sensiblement parallèle à l'axe de la voilure 14. Les notions haut et bas font référence aux liaisons entre le mât et le reste de l'aéronef, le haut correspondant à la liaison entre le mât et la voilure de l'aéronef et le bas correspondant à la liaison entre le mât et le moteur.

La structure primaire 20 du mât 18 est reliée au moteur 16 par une liaison qui comprend une attache moteur arrière 32, une attache moteur avant 34 et un couple de bielles de poussée 36 qui assurent la reprise des efforts de poussée.

Selon un mode de réalisation visible sur la figure 3, l'attache moteur arrière 32 comprend une première platine 38 solidaire de la structure primaire 20 du mât 18, une deuxième platine 40 solidaire du moteur 16 et des éléments de liaison 42, chaque platine 38, 40 comprenant un orifice de passage pour chaque élément de liaison 42.

Chaque élément de liaison 42 est un boulon qui comprend d'une part une vis 44 avec une tête 46 qui prend appui contre l'une des platines 38, 40 (ou contre une rondelle en contact avec l'une des platines) et une tige filetée 48 qui traverse les orifices de passage, et d'autre part, un écrou 50 qui se visse sur la tige filetée 48 et qui prend appui contre l'autre platine 38, 40 (ou contre une rondelle en contact avec l'autre platine).

Selon ce mode de réalisation, pour chaque élément de liaison, les deux zones disposées dans le prolongement de la tige filetée 48 doivent être dégagées pour accéder à la tête de la vis et à l'écrou et les serrer. Le fait de prévoir cet accès pour la structure primaire 20 du mât 18 induit lors de sa conception une contrainte supplémentaire, généralement pénalisante en termes de compacité.

La présente invention vise à remédier aux inconvénients de l'art antérieur.

A cet effet, l'invention a pour objet un ensemble moteur d'aéronef reliant un moteur à un mât et comprenant :
- Une première partie solidaire ou faisant partie d'un premier élément parmi le moteur et le mât,
- Une deuxième partie solidaire ou faisant partie d'un second élément parmi le moteur et le mât,
- Des éléments de liaison qui comprennent chacun une vis qui comporte une tête configurée pour prendre appui contre la première partie en fonctionnement et une tige filetée,
- Les première et deuxième parties comprenant chacune un trou de passage pour chaque élément de liaison,
- la deuxième partie comprenant au moins un trou transversal débouchant au niveau d'une face d'accès de la deuxième partie et dans lequel débouche au moins deux orifices de passage, et un écrou configuré pour coopérer avec l'une des tiges filetées, l'écrou étant un écrou transversal qui comprend au moins deux corps reliés entre eux et qui comportent chacun un trou taraudé, les trous taraudés de l'écrou ayant des axes sensiblement confondus avec des axes des orifices de passage en fonctionnement.

L'ensemble moteur est caractérisée en ce que l'écrou comprend, à une de ses extrémités, une tête qui est reliée à un des corps, la tête comprend une aile configurée pour permettre la préhension de l'écrou, l'aile comprend un prolongement configuré pour former une butée en appui contre la face d'accès en fonctionnement, et l'aile comporte des faces parallèles aux axes des trous taraudés.

Selon l'invention, l'écrou est mis en place dans le trou transversal depuis une zone située à l'extérieur de la structure primaire depuis une face d'accès et n'a plus besoin d'être maintenu lors du serrage.

Selon une autre caractéristique, l'écrou comprend, à une de ses extrémités, une tête qui est reliée au corps.

Selon d'autres caractéristiques, cette tête comprend :
- une butée configurée pour prendre appui contre la face d'accès en fonctionnement, et/ou
- une portion cylindrique avec un diamètre sensiblement égal à celui du trou transversal, et/ou
- une aile avec deux faces parallèles aux axes des trous taraudés, ladite aile étant configurée pour permettre la préhension de l'écrou.

L'aile comprend un prolongement en saillie par rapport à la portée cylindrique de la tête, ledit prolongement étant configuré pour prendre appui contre la face d'accès en fonctionnement.

Selon une première variante, l'écrou comprend au moins une entretoise configurée pour relier deux corps, les corps et la ou les entretoise(s) étant réalisés d'un seul tenant.

Selon une autre variante, l'écrou comprend un support qui comporte au moins deux logements configurés chacun pour recevoir un corps. De préférence, le support comprend une tête avec une butée configurée pour prendre appui contre la face d'accès en fonctionnement.

D'autres caractéristiques et avantages ressortiront de la description qui va suivre de l'invention, description donnée à titre d'exemple uniquement, en regard des dessins annexés sur lesquels :
- La figure 1 est une vue en perspective d'un aéronef,
- La figure 2 est vue latérale d'un ensemble moteur et d'un mât sans les éléments de carénage,
- La figure 3 est une coupe d'une partie d'une attache moteur qui illustre l'art antérieur,
- La figure 4 est une vue en perspective d'une partie d'une attache moteur qui illustre un mode de réalisation de l'invention,
- La figure 5 est une coupe transversale partielle d'une attache moteur qui illustre un mode de réalisation de l'invention,
- La figure 6 est une vue en perspective d'une attache moteur qui illustre un mode de réalisation de l'invention,
- Les figures 7 et 8 sont des vues en perspective selon deux points de vue, d'un écrou transversal qui illustrent un mode de réalisation de l'invention,
- La figure 9 est une vue en perspective d'un écrou transversal qui illustre un autre mode de réalisation de l'invention,
- La figure 10 est une vue en perspective d'un écrou transversal qui illustre un autre mode de réalisation de l'invention.

Sur les figures 4 à 6, on a représenté une attache moteur arrière 52 configurée pour relier un moteur à une structure primaire d'un mât d'un aéronef.

L'attache moteur arrière 52 comprend une première partie 54 qui correspond à une partie du moteur ou qui est solidaire du moteur, une deuxième partie 56 (visible sur les figures 5 et 6) qui correspond à une partie de la structure primaire ou qui est solidaire de la structure primaire et des éléments de liaison 58 qui relient les première et deuxième parties 54 et 56. En variante, la première partie 54 correspond à une partie de la structure primaire ou est solidaire de la structure primaire et la deuxième partie 56 correspond à une partie du moteur ou est solidaire du moteur.

Les première et deuxième parties 54 et 56 comprennent respectivement des première et deuxième surfaces de contact 54S et 56S orientées l'une vers l'autre, en contact l'une avec l'autre ou bien séparées par une pièce intercalaire 60.

Pour chaque élément de liaison 58, les première et deuxième parties 54 et 56 comprennent respectivement des orifices de passage 70 et 72. Chaque élément de liaison 58 comprend une vis 62 qui comporte une tête 64 configurée pour prendre appui directement ou indirectement contre la première partie 54 et une tige filetée 66.

Selon une configuration visible sur les figures 4 et 5, l'attache arrière 52 comprend quatre séries de deux d'éléments de liaison 58, alignées chacune selon une direction sensiblement perpendiculaire à la direction longitudinale. Pour chaque série, les tiges filetées des éléments de liaison 58 (visibles sur la figure 5) ont des axes parallèles et verticaux.

Quelle que soit la configuration, l'attache arrière 52 comprend au moins deux éléments de liaison 58 qui ont des axes A58 parallèles et disposés dans un même plan.

Quel que soit le mode de réalisation, la deuxième partie 56 comprend une face d'accès 74 sensiblement parallèle aux axes A58 des éléments de liaison 58. La face d'accès 74 correspond à une surface qui sépare l'intérieur et l'extérieur de la deuxième partie 56.

Selon une caractéristique de l'invention, la deuxième partie 56 comprend au moins un trou transversal 76, cylindrique, distant de la surface de contact 56S, dans lequel débouchent au moins deux orifices de passage 72 de la deuxième partie 56. Ce trou transversal 76 débouche au niveau de la face d'accès 74. Selon une configuration, ce trou transversal 76 a un diamètre et il est positionné pour qu'une fois les éléments de liaison 58 serrés, les extrémités 78 des tiges filetées 66 soient positionnées dans le trou transversal 76, de préférence légèrement au-dessus de l'axe A76 du trou transversal 76.

Selon un mode de réalisation, le trou transversal 76 a un axe A76 sécant et sensiblement perpendiculaire aux axes A72 des orifices de passage 72, ledit axe A76 étant parallèle à la direction transversale.

Selon une caractéristique de l'invention, l'attache moteur arrière 52 comprend au moins un écrou 68 pour coopérer avec la tige filetée 66 d'un des éléments de liaison 58. Un tel écrou est transversal et comprend au moins deux corps 80 reliés entre eux. Chaque corps 80 comporte un trou taraudé 82 configuré pour permettre le vissage de la tige filetée 66 d'un des éléments de liaison 58. Les trous taraudés 82 d'un même écrou 68 ont des axes A82 parallèles et qui sont sensiblement confondus avec les axes A72 des orifices de passage 72 dans lesquels se logent les tiges filetées 66 des éléments de liaison 58 qui coopèrent avec l'écrou 68.

Les corps 80 d'un même écrou 68 ne sont pas nécessairement tous identiques. Selon un mode de réalisation visible sur la figure 5, le corps 80.2 le plus éloigné de la face d'accès 74 peut être plus petit que le corps 80.1 le plus proche de la face d'accès 74 pour par exemple faciliter l'insertion de l'écrou 68 dans le trou transversal 76. De plus, les corps 80 d'un même écrou 68 peuvent être dimensionnés différemment car ils peuvent être sollicités différemment.

Selon cette caractéristique, l'écrou 68 est mis en place dans le trou transversal 76 depuis la face d'accès 74 et le serrage des éléments de liaison 58 est réalisé seulement en agissant sur les têtes 64 des vis 62 sans avoir besoin de maintenir l'écrou 68. Par conséquent, dans le cas d'une structure primaire d'un mât, la zone dans le prolongement de la tige filetée 66 n'a plus besoin d'être dégagée et accessible. L'écrou 68 est mis en place depuis une zone située à l'extérieur de la structure primaire et n'a plus besoin d'être maintenu lors du serrage. En effet, les corps 80 de l'écrou étant reliés, leur rotation lors du vissage des vis 62 des éléments de liaison 58 est impossible.

De préférence, l'attache arrière 52 comprend plusieurs séries d'éléments de liaison 58 alignés. Dans ce cas, l'écrou 68 comprend autant de corps 80 que la série comprend d'éléments de liaison 58.

Selon un mode de réalisation visible sur les figures 5, 7 et 8, l'écrou 68 comprend au moins une entretoise 96 qui relie deux corps 80, les deux corps 80 et l'entretoise 96 étant réalisés d'un seul tenant et ne formant qu'une unique pièce. De préférence, tous les corps 80 d'un écrou 68 sont reliés deux à deux par des entretoises 96, les corps 80 et les entretoises 96 étant réalisés d'un seul tenant et ne formant qu'une unique pièce.

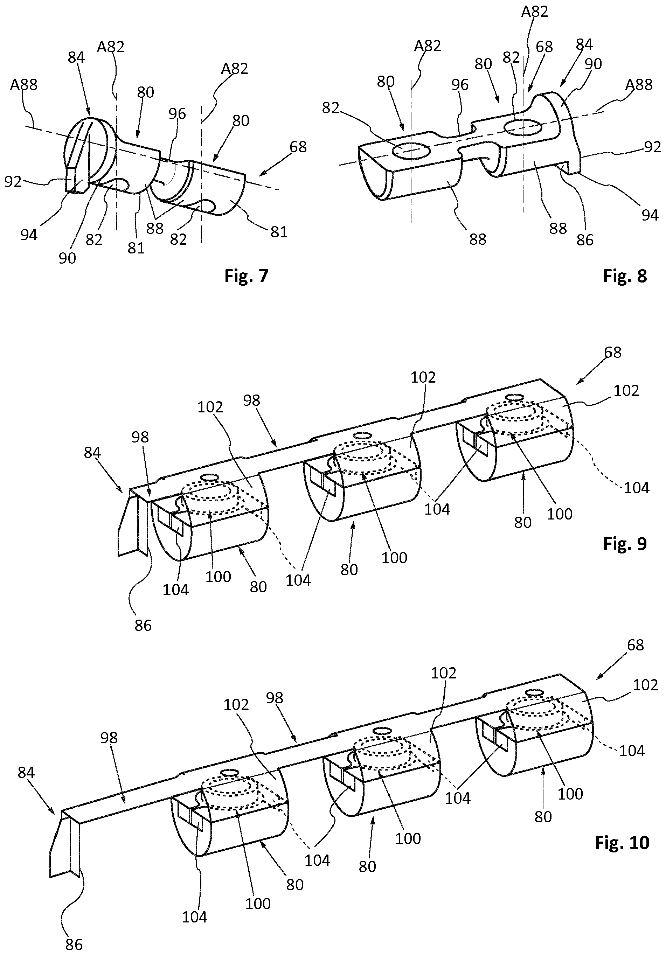

Selon un mode de réalisation, chaque corps 80 est un demi-cylindre 88 avec un diamètre inférieur ou égal au diamètre du trou transversal 76 et un axe A88 perpendiculaire à l'axe A82 du trou taraudé. Ce mode de réalisation permet de réduire la masse de l'écrou 68. Selon un autre mode de réalisation visible sur la figure 9, l'écrou 68 comprend un support 98 configuré pour maintenir plusieurs corps 80. Pour chaque corps 80, le support 98 comprend un logement 100 dans lequel s'imbrique un des corps 80, ledit logement 100 étant configuré pour immobiliser le corps 80 lorsque l'ensemble formé par le support 98 et les corps 80 est introduit dans le trou transversal 76. A cet effet, chaque corps 80 est demi-cylindrique et pour chaque corps 80, le support 98 comprend une portion demi-cylindrique 102 complémentaire à la forme demi-cylindrique du corps 80 et deux butées 104 disposées de part et d'autre du corps 80 configurées pour immobiliser le corps 80 selon une direction parallèle à l'axe A76 du trou transversal 76 en fonctionnement. Selon ce mode de réalisation, la portion demi-cylindrique 102 et les deux butées 104 forment un logement 100 configuré pour recevoir un corps 80.

De préférence, les corps 80 sont métalliques et le support 98 en métal, en matière plastique ou en matériau composite.

Selon une autre caractéristique, l'écrou comprend, à une de ses extrémités, une tête 84 qui est reliée à un des corps 80 et qui comporte une butée 86 configurée pour prendre appui contre la face d'accès 74 en fonctionnement. La distance entre l'axe A82 du trou taraudé 82 le plus proche de la tête 84 et la butée 86 est égale à la distance entre l'axe A72 du trou de passage 72 le plus proche de la face d'accès 74 et la face d'accès 74 de la deuxième partie 56. Cet agencement facilite le positionnement du trou taraudé 82 par rapport à la tige filetée 66.

Avantageusement, la tête 84 comprend une portion cylindrique 90 avec un diamètre sensiblement égal à celui du trou transversal 76 et une longueur (dimension selon la direction transversale) réduite, de l'ordre de 3 à 10 mm. La portion cylindrique 90 qui a un diamètre égal à celui du trou transversal 76 empêche tout mouvement de translation de l'écrou 68 dans un plan perpendiculaire à l'axe A76 du trou transversal 76. Cette configuration facilite le vissage de la tige filetée 66 dans l'écrou 68.

De préférence, la tête est positionnée par rapport aux corps 80 de sorte qu'en fonctionnement, la portion cylindrique 90 affleure la face d'accès 74 et obture le trou transversal 76 comme illustré sur la figure 6.

Selon un mode de réalisation, la tête 84 comprend un moyen de positionnement.

Selon une variante, le moyen de positionnement comprend une aile 92 avec une épaisseur de l'ordre de 4 à 10 mm. En fonctionnement, l'aile 92 reste en saillie par rapport à la face d'accès 74, à l'extérieur de la structure primaire 20. Cette aile 92 est configurée pour permettre la préhension de l'écrou 68 par un opérateur et faciliter son introduction dans le trou transversal 76.

L'aile 92 sert également d'indicateur de positionnement de la tête 84 permettant de confirmer que l'axe de l'écrou 68 est sensiblement perpendiculaire aux axes des tiges filetées 66.

Avantageusement, les faces de l'aile 92 sont parallèles aux axes A82 des trous taraudés 82. Cette configuration permet à un opérateur d'orienter en rotation l'écrou 68 dans le trou transversal 76 afin de le positionner correctement de sorte que les trous taraudés 82 soient alignés avec les tiges filetées 66.

L'aile 92 comprend un prolongement 94 qui comporte un chant parallèle aux axes A82 des trous taraudés 82 qui forme la butée 86. En fonctionnement, le prolongement 94 est orienté vers la première partie 54. Ce prolongement 94 contribue également à faciliter l'orientation de l'écrou 68 dans le trou transversal 76.

Selon une autre variante, le moyen de positionnement peut également être une rainure (non représentée) dans laquelle un outil de rotation (tel qu'un tournevis) peut être introduit pour ajuster l'alignement de l'écrou 68.

Selon des modes de réalisation visibles sur les figures 5 à 8, la tête 84 et les corps 80 de l'écrou 68 sont réalisés d'un seul tenant et forment une unique pièce.

Selon d'autres modes de réalisation visibles sur la figure 9, la tête 84 et le support 98 sont réalisés d'un seul tenant et forment une unique pièce.

Selon des modes de réalisation visibles sur les figures 5 à 8, la tête 84 est accolée ou intégrée à un des corps 80.

Selon d'autres modes de réalisation visibles sur les figures 9 et 10, la tête 84 est distante des corps 80. La distance entre la tête 84 et le corps 80 le plus proche peut varier d'un écrou 68 à l'autre afin de s'adapter à la géométrie de l'attache moteur. A titre d'exemple, la distance qui sépare la tête 84 et le corps 80 le plus proche de l'écrou 68 visible sur la figure 9 est inférieure à celle de l'écrou 68 visible sur la figure 10.

## Revendications

1. Ensemble moteur d'aéronef reliant un moteur (16) à un mât (18) et comprenant :
- Une première partie (54) solidaire ou faisant partie d'un premier élément parmi le moteur (16) et le mât (18),
- Une deuxième partie (56) solidaire ou faisant partie d'un second élément parmi le moteur (16) et le mât (18),
- Des éléments de liaison (58) qui comprennent chacun une vis (62) qui comporte une tête (64) configurée pour prendre appui contre la première partie (54) en fonctionnement et une tige filetée (66),
- Les première et deuxième parties (54, 56) comprenant chacun un orifice de passage (70, 72) pour chaque élément de liaison (58),
- la deuxième partie (56) comprenant au moins un trou transversal (76) débouchant au niveau d'une face d'accès (74) de la deuxième partie (56) et dans lequel débouche au moins deux orifices de passage (72), et un écrou (68) configuré pour coopérer avec l'une des tiges filetées (66), l'écrou étant un écrou transversal qui comprend au moins deux corps (80) reliés entre eux et qui comportent chacun un trou taraudé (82), les trous taraudés (82) de l'écrou (68) ayant des axes (A82) sensiblement confondus avec des axes (A72) des orifices de passage (72) en fonctionnement,
**caractérisé en ce que** :
- l'écrou (68) comprend, à une de ses extrémités, une tête (84) qui est reliée à un des corps (80),
- la tête (84) comprend une aile (92) configurée pour permettre la préhension de l'écrou (68),
- l'aile (92) comprend un prolongement (94) configuré pour former une butée (86) en appui contre la face d'accès (74) en fonctionnement, et
- l'aile (92) comporte des faces parallèles aux axes (A82) des trous taraudés (82).

2. Ensemble moteur d'aéronef selon la revendication précédente, **caractérisée en ce que** la tête (84) comporte une butée (86) configurée pour prendre appui contre la face d'accès (74) en fonctionnement.

3. Ensemble moteur d'aéronef selon la revendication précédente, **caractérisée en ce que** la tête (84) comprend une portion cylindrique (90) avec un diamètre sensiblement égal à celui du trou transversal (76).

4. Ensemble moteur d'aéronef selon l'une des revendications précédentes, **caractérisée en ce que** l'écrou (68) comprend au moins une entretoise configurée pour relier deux corps (80), les corps (80) et la ou les entretoise(s) étant réalisés d'un seul tenant.

5. Ensemble moteur d'aéronef selon l'une des revendications 1 à 3, **caractérisée en ce que** l'écrou (68) comprend un support (98) qui comporte au moins deux logements (100) configurés chacun pour recevoir un corps (80).

6. Ensemble moteur d'aéronef selon la revendication précédente, **caractérisée en ce que** le support (98) comprend une tête (84) avec une butée (86) configurée pour prendre appui contre la face d'accès (74) en fonctionnement.

## Patentansprüche

1. Luftfahrzeugtriebwerksbaugruppe, die ein Triebwerk (16) mit einem Mast (18) verbindet und Folgendes umfasst:
- einen ersten Teil (54), der mit einem ersten der Elemente Triebwerk (16) und Mast (18) fest verbunden ist oder Bestandteil desselben ist,
- einen zweiten Teil (56), der mit einem zweiten der Elemente Triebwerk (16) und Mast (18) fest verbunden ist oder Bestandteil desselben ist,
- Verbindungselemente (58), die jeweils eine Schraube (62) umfassen, die einen Kopf (64), der dazu gestaltet ist, im Betrieb gegen den ersten Teil (54) anzuliegen, und eine Gewindestange (66) aufweist,
- wobei der erste und der zweite Teil (54, 56) jeweils eine Durchgangsöffnung (70, 72) für jedes Verbindungselement (58) umfassen,
- wobei der zweite Teil (56) zumindest ein Querloch (76), das in Höhe einer Zugangsfläche (74) des zweiten Teils (56) mündet und in das zumindest zwei Durchgangsöffnungen (72) münden, und eine Mutter (68), die dazu gestaltet ist, mit einer der Gewindestangen (66) zusammenzuwirken, umfasst, wobei die Mutter eine Quermutter ist, die zumindest zwei miteinander verbundene Körper (80) umfasst, die jeweils ein Gewindeloch (82) aufweisen, wobei die Gewindelöcher (82) der Mutter (68) Achsen (A82) aufweisen, die im Betrieb im Wesentlichen mit den Achsen (A72) der Durchgangsöffnungen (72) zusammenfallen,
**dadurch gekennzeichnet, dass**:
- die Mutter (68) an einem ihrer Enden einen Kopf (84) umfasst, der mit einem der Körper (80) verbunden ist,
- der Kopf (84) einen Flügel (92) umfasst, der dazu gestaltet ist, das Greifen der Mutter (68) zu ermöglichen,
- der Flügel (92) eine Verlängerung (94) umfasst, die dazu gestaltet ist, einen Anschlag (86) auszubilden, der im Betrieb an der Zugangsfläche (74) anliegt, und
- der Flügel (92) Seiten aufweist, die parallel zu den Achsen (A82) der Gewindelöcher (82) sind.

2. Luftfahrzeugtriebwerksbaugruppe nach dem vorangehenden Anspruch, **dadurch gekennzeichnet, dass** der Kopf (84) einen Anschlag (86) aufweist, der dazu gestaltet ist, im Betrieb an der Zugangsfläche (74) anzuliegen.

3. Luftfahrzeugtriebwerksbaugruppe nach dem vorangehenden Anspruch, **dadurch gekennzeichnet, dass** der Kopf (84) einen zylindrischen Abschnitt (90) mit einem Durchmesser, der im Wesentlichen gleich dem des Querlochs (76) ist, aufweist.

4. Luftfahrzeugtriebwerksbaugruppe nach einem der vorangehenden Ansprüche, **dadurch gekennzeichnet, dass** die Mutter (68) zumindest einen Abstandhalter umfasst, der dazu gestaltet ist, zwei Körper (80) zu verbinden, wobei die Körper (80) und der bzw. die Abstandhalter aus einem Stück gefertigt sind.

5. Luftfahrzeugtriebwerksbaugruppe nach einem der Ansprüche 1 bis 3, **dadurch gekennzeichnet, dass** die Mutter (68) einen Träger (98) umfasst, der zumindest zwei Aufnahmen (100) aufweist, die jeweils dazu gestaltet sind, einen Körper (80) aufzunehmen.

6. Luftfahrzeugtriebwerksbaugruppe nach dem vorangehenden Anspruch, **dadurch gekennzeichnet, dass** der Träger (98) einen Kopf (84) mit einem Anschlag (86) umfasst, der dazu gestaltet ist, im Betrieb an der Zugangsfläche (74) anzuliegen.

## Claims

1. Aircraft engine assembly connecting an engine (16) to a pylon (18) and comprising:
- a first part (54) secured to or forming part of a first of the elements that are the engine (16) and the pylon (18),
- a second part (56) secured to or forming part of a second of the elements that are the engine (16) and the pylon (18),
- connecting elements (58) each of which comprises a screw (62) which comprises a head (64) configured to bear against the first part (54) in operation and a threaded shank (66),
- the first and second parts (54, 56) each comprising a passage orifice (70, 72) for each connecting element (58),
- the second part (56) comprising at least one transverse hole (76) opening onto an access face (74) of the second part (56) and into which there open at least two passage orifices (72), and a nut (68) configured to engage with one of the threaded shanks (66), the nut being a transverse nut which comprises at least two bodies (80) joined together and which each comprise a tapped hole (82), the tapped holes (82) of the nut (68) having axes (A82) that substantially coincide with axes (A72) of the passage orifices (72) in operation,
**characterized in that**:
- the nut (68) at one of its ends comprises a head (84) which is connected to one of the bodies (80),
- the head (84) comprises a wing (92) configured to allow the nut (68) to be grasped,
- the wing (92) comprises an extension (94) configured to form a thrust surface (86) bearing against the access face (74) in operation, and
- the wing (92) comprises faces parallel to the axes (A82) of the tapped holes (82).

2. Aircraft engine assembly according to the preceding claim, **characterized in that** the head (84) comprises a thrust surface (86) configured to bear against the access face (74) in operation.

3. Aircraft engine assembly according to the preceding claim, **characterized in that** the head (84) comprises a cylindrical portion (90) with a diameter substantially equal to that of the transverse hole (76).

4. Aircraft engine assembly according to one of the preceding claims, **characterized in that in that** the nut (68) comprises at least one spacer piece configured to connect two bodies (80), the bodies (80) and the spacer piece or pieces being produced as a single piece.

5. Aircraft engine assembly according to one of Claims 1 to 3, **characterized in that** the nut (68) comprises a support (98) which comprises at least two housings (100) each configured to accept a body (80).

6. Aircraft engine assembly according to the preceding claim, **characterized in that** the support (98) comprises a head (84) with a thrust surface (86) configured to bear against the access face (74) in operation.
